# EUROPEAN PATENT APPLICATION

(11) **EP 4 220 357 A2**
(43) Date of publication of application: **02.08.2023**
(21) Application number: 22215554.1
(22) Date of filing: 21.12.2022
(51) Int. Cl.: G06F 3/01, G06F 3/04883

(54) **CHARACTER INPUT METHOD AND APPARATUS, ELECTRONIC DEVICE AND MEDIUM**

(30) Priority: 28.01.2022 WO PCT/NZ2022/050011
(71) Applicant: CHU, John, 0612 Auckland (NZ)
(72) Inventor: CHU, John, 0612 Auckland (NZ)
(74) Representative: Ipey

(57) **Abstract**

The present application provides a character input method and apparatus, an electronic device and a medium. The method includes: acquiring and displaying at least one input stroke; retrieving and displaying candidate components containing the at least one input stroke; in response to a component selection instruction to select a target component from the candidate components, displaying the target component and at least one position selection button for selecting a position of the target component; in response to a position selection instruction to select the position of the target component, acquiring a target position corresponding to the position selection instruction; retrieving and displaying candidate characters with the target component at the target position; and in response to a character selection instruction to select a target character from the candidate characters, acquiring the target character.

## Description

### TECHNICAL FIELD

The present application relates to the field of input methods, and in particular to a character input method and apparatus, an electronic device and a medium.

### BACKGROUND

An input method refers to a coding method used to input characters into electronic devices such as computers or mobile phones, and is an important technology of language information processing.

Common keyboard keys include Latin letters, which are carriers of many phonetic languages. Phonetic languages which do not use Latin letters can also be expressed in Latin letters after Latinization. Therefore, an input method for phonetic languages is very easy to design, and "make typing as easy as writing" is not hard to realize.

However, it is very difficult to design an input method for languages with an ideographic function, such as ideographic languages and ideo-phonographic languages. Taking Chinese characters as an example, mainstream input methods for Chinese characters are divided into two types: phonetic-based and shape-based. Phonetic-based input methods are represented by Pinyin input methods, but the premise of using Pinyin input methods is that users have at least mastered the pronunciation of commonly used Chinese characters, which requires a lot of learning; besides, there are a large number of homophones in Chinese, so a large number of duplicate codes exist in Pinyin input methods, which seriously affects the accuracy and efficiency of input. Shape-based input methods, such as Wubi input method and Cangjie input method, can effectively reduce the code duplication rate compared with phonetic-based input methods by decomposing Chinese characters into roots and coding the roots. However, it also requires users to learn and memorize roots, and decomposing methods and coding methods thereof.

It can be seen from the above that in the existing technology, the design of input methods for languages with an ideographic function is difficult, and a lot of learning is required before use, which is not conducive to the promotion of characters and the input and use in electronic devices.

### SUMMARY

The present application aims to provide a character input method and apparatus, an electronic device and a medium to solve the problem in the existing technology that the design and use of input methods for languages with an ideographic function are difficult.

According to one aspect of embodiments of the present application, there is provided a character input method, including: acquiring and displaying at least one input stroke; retrieving and displaying candidate components containing the at least one input stroke; in response to a component selection instruction to select a target component from the candidate components, displaying the target component and at least one position selection button for selecting a position of the target component; in response to a position selection instruction to select the position of the target component, acquiring a target position corresponding to the position selection instruction; retrieving and displaying candidate characters with the target component at the target position; and in response to a character selection instruction to select a target character from the candidate characters, acquiring the target character.

According to one aspect of embodiments of the present application, there is provided a character retrieval method, including: acquiring a target character by the method described above; and inputting the target character into a database containing the target character for retrieval.

According to one aspect of embodiments of the present application, there is provided a character generation method, including: selecting at least one target component; and based on character creation logic, generating a character according to the at least one target component.

According to one aspect of embodiments of the present application, there is provided a character input apparatus, including: an acquisition module configured to acquire and display at least one input stroke; a first retrieval module configured to retrieve and display candidate components containing the at least one input stroke; a display module configured to, in response to a component selection instruction to select a target component from the candidate components, display the target component and at least one position selection button for selecting a position of the target component; a first selection module configured to, in response to a position selection instruction to select the position of the target component, acquire a target position corresponding to the position selection instruction; a second retrieval module configured to retrieve and display candidate characters with the target component at the target position; and a second selection module configured to, in response to a character selection instruction to select a target character from the candidate characters, acquire the target character.

According to one aspect of embodiments of the present application, there is provided a character retrieval apparatus, including: an acquisition module configured to acquire and display at least one input stroke; a first retrieval module configured to retrieve and display candidate components containing the at least one input stroke; a display module configured to, in response to a component selection instruction to select a target component from the candidate components, display the target component and at least one position selection button for selecting a position of the target component; a first selection module configured to, in response to a position selection instruction to select the position of the target component, acquire a target position corresponding to the position selection instruction; a second retrieval module configured to retrieve and display candidate characters with the target component at the target position; a second selection module configured to, in response to a character selection instruction to select a target character from the candidate characters, acquire the target character; and a third retrieval module configured to input the target character into a database containing the target character for retrieval.

According to one aspect of embodiments of the present application, there is provided a character generation apparatus, including: a selection module configured to select at least one target component; and a generation module configured to, generate, based on character creation logic, a character according to the at least one target component.

According to one aspect of embodiments of the present application, there is provided an electronic device including a memory and a processor, where the memory stores program instructions which, when executed by the processor, cause the processor to implement any method according to the above aspects.

According to one aspect of embodiments of the present application, there is provided a computer-readable storage medium storing program instructions, wherein the program instructions, when executed by a processor, cause the processor to implement any method according to the above aspects.

According to one aspect of embodiments of the present application, there is provided a computer program product or computer program including computer instructions stored in a computer-readable storage medium. The processor of the computer device reads the computer instructions from the computer-readable storage medium, and the processor executes the computer instructions to cause the computer device to carry out the methods provided in the various alternative embodiments described above.

The technical scheme provided by the embodiments of the present application may have the following beneficial effects:
In the technical scheme provided by some embodiments of the present application, by acquiring and displaying at least one input stroke, retrieving and displaying candidate components containing the at least one input stroke, in response to a component selection instruction to select a target component from the candidate components, displaying the target component and at least one position selection button for selecting a position of the target component, in response to a position selection instruction to select the position of the target component, acquiring a target position corresponding to the position selection instruction, and retrieving and displaying candidate characters with the target component at the target position, the target character is acquired in response to a character selection instruction to select a target character from the candidate characters. According to the present application, the target component is selected according to the at least one input stroke, then the candidate characters are obtained based on the target component and the target position thereof, and finally the target character is selected from the candidate characters. For languages with an ideographic function, users only need to know the shapes of characters to type in without the need to learn the pronunciations or roots of the characters, which reduces the difficulty of using an input method for languages with an ideographic function, thus facilitating the popularization and use of the languages.

It is to be understood that the foregoing general description and the following detailed description are exemplary only and do not limit the present application.

### BRIEF DESCRIPTION OF DRAWINGS

The accompanying drawings, which are incorporated into and constitute a part of the specification, illustrate embodiments consistent with the present application and, together with the description, serve to explain the principles of the present application.
Fig. 1 shows a diagram of an exemplary system architecture to which the technical scheme of the embodiments of the present application can be applied;
Fig. 2 is a flowchart of an embodiment of a character input method of the present application;
Fig. 3 is a detailed flowchart of S11 in Fig. 2;
Fig. 4 is another detailed flowchart of S11 in Fig. 2;
Fig. 5 is a detailed flowchart of S 13 in Fig. 2;
Fig. 6 is a schematic diagram of movement and adjustment of a component in an embodiment of a character input method of the present application;
Fig. 7 is a schematic diagram of position selection buttons and corresponding indicator buttons in an embodiment of a character input method of the present application;
Fig. 8 is a flowchart of another embodiment of a character input method of the present application;
Fig. 9 is a schematic diagram of an input method interface according to an embodiment of a character input method of the present application in an initial state;
Fig. 10 is a schematic diagram of an input method interface according to an embodiment of a character input method of the present application after a first update;
Fig. 11 is a schematic diagram of an input method interface according to an embodiment of a character input method of the present application after a second update;
Fig. 12 is a schematic diagram of another input method interface according to an embodiment of a character input method of the present application in an initial state;
Fig. 13 is a schematic diagram of another input method interface according to an embodiment of a character input method of the present application in a first round of switching;
Fig. 14 is a schematic diagram of another input method interface according to an embodiment of a character input method of the present application in a second round of switching;
Fig. 15 is a flowchart of an embodiment of a character retrieval method of the present application;
Fig. 16 is a flowchart of an embodiment of a character generation method of the present application;
Fig. 17 is a flowchart of acquiring a target component in an embodiment of a character generation method of the present application;
Fig. 18 is a flowchart of acquiring a target structure in an embodiment of a character generation method of the present application;
Fig. 19 is a schematic diagram of an embodiment of a character input apparatus of the present application;
Fig. 20 is a schematic diagram of an embodiment of a character retrieval apparatus of the present application;
Fig. 21 is a schematic diagram of an embodiment of a character generation apparatus of the present application;
Fig. 22 is a schematic diagram of an embodiment of an electronic device of the present application; and
Fig. 23 is a schematic diagram of an embodiment of a computer-readable storage medium of the present application.

### DETAILED DESCRIPTION

Exemplary embodiments will now be described more fully with reference to the accompanying drawings. However, exemplary embodiments can be implemented in many forms and should not be construed as being limited to the examples set forth herein; on the contrary, these embodiments are provided to make the present application more comprehensive and complete, and to fully convey the concept of the example embodiments to those skilled in the art.

In addition, the described features, structures, or characteristics may be combined in any suitable manner in one or more embodiments. In the following description, numerous specific details are provided to give a thorough understanding of the embodiments of the present application. However, those skilled in the art will realize that the technical scheme of the present application can be practiced without one or more of the specific details, or with other methods, components, devices, steps, etc. In other cases, well-known methods, devices, implementations or operations are not shown or described in detail to avoid obscuring aspects of the present application.

The block diagrams shown in the drawings are only functional entities and do not necessarily correspond to physically separate entities. That is, these functional entities can be implemented in the form of software, or in one or more hardware modules or integrated circuits, or in different networks and/or processor devices and/or microcontroller devices.

The flowchart shown in the drawings is only an exemplary illustration, and does not necessarily include all contents and operations/steps, nor do the operations/steps have to be executed in the described order. For example, some operations/steps can be decomposed, while some operations/steps can be combined or partially combined, so the actual execution order may change according to the actual situation.

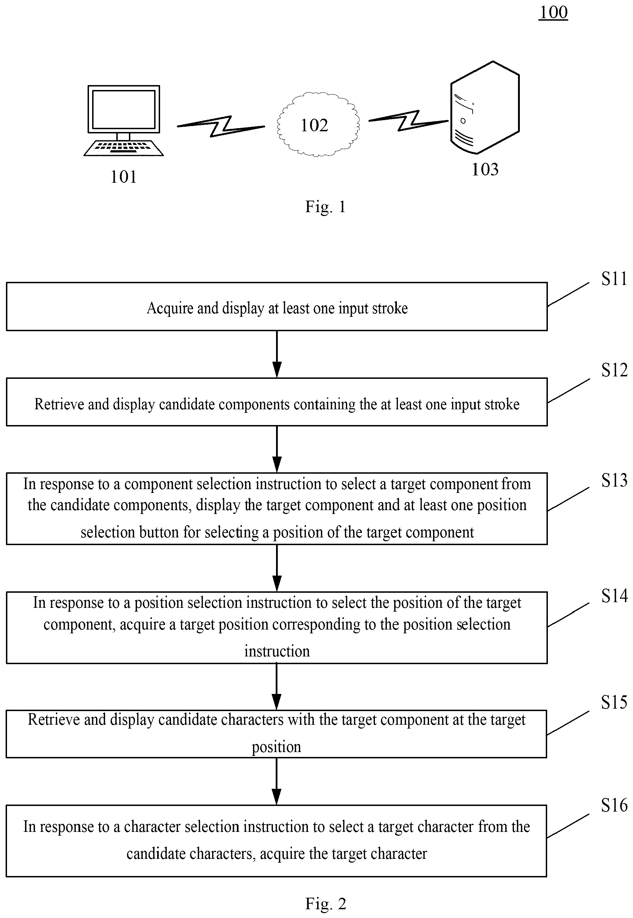

Fig. 1 shows a diagram of an exemplary system architecture 100 to which the technical scheme of the embodiments of the present application can be applied.

As shown in Fig. 1, the system architecture 100 may include a client 101, a network 102 and a server 103. The network 102 is a medium for providing a communication link between the client 101 and the server 103. The network 102 may have various connection types, such as a wired communication link and a wireless communication link, which is not limited herein.

It should be understood that the number of clients 101, the number of networks 102 and the number of servers 103 in Fig. 1 are only schematic. There may be any number of the client(s) 101, network(s) 102 and server(s) 103 according to implementation requirements. For example, the server 103 may be an independent physical server, a server cluster composed of multiple physical servers or a distributed system, or may be a cloud server which provides basic cloud computing services such as cloud services, cloud databases, cloud computing, cloud functions, cloud storage, network services, cloud communication, middleware services, domain name services, security services, content delivery networks (CDN), and big data and artificial intelligence platforms. The client 101 may be a smart phone, a tablet computer, a laptop computer, a desktop computer, a smart speaker, a smart watch, a robot, etc., but is not limited thereto.

In one embodiment of the present application, the client 101 acquires and displays at least one input stroke; retrieves and displays candidate components containing the at least one input stroke; in response to a component selection instruction to select a target component from the candidate components, displays the target component and at least one position selection button for selecting a position of the target component; in response to a position selection instruction to select the position of the target component, acquires a target position corresponding to the position selection instruction; retrieves and displays candidate characters with the target component at the target position; and in response to a character selection instruction to select a target character from the candidate characters, acquires the target character. According to the present application, the target component is selected according to the at least one input stroke, then the candidate characters are obtained based on the target component and the target position thereof, and finally the target character is selected from the candidate characters. For languages with an ideographic function, users only need to know the shapes of characters to type in without the need to learn the pronunciations or roots of the characters, which reduces the difficulty of using an input method for languages with an ideographic function, thus facilitating the popularization and use of the languages.

The character input/retrieval method provided by the embodiments of the present application is generally executed by the client 101, and accordingly, a character input apparatus is generally arranged in the client 101. However, in a further embodiment of the present application, the server 103 may also have similar functions as the client 101, so as to execute the character input/retrieval method provided by the embodiments of the present application. Alternatively, data required for executing the character input/retrieval method provided by the embodiments of the present application, such as stroke database, component database, structure database, database for retrieval, etc., may be partially or completely stored in the server 103, and in this case, the client 101 may execute the character input/retrieval method together with the server 103. For example, when the data stored on the server 103 are needed, the client 101 may send an instruction input by the user to the server 10, and the server 103 conducts data retrieval according to the instruction, and then returns retrieval results to the client 101 which can display the search retrieval and give a prompt about subsequent steps as needed.

The implementation details of the technical scheme of the embodiment of the present application are described in detail below.

Fig. 2 is a flowchart of an embodiment of a character input method of the present application. To facilitate explanation, the client 101 shown in Fig. 1 is taken as the executive body in the following description. As shown in Fig. 2, this embodiment may include the following steps.

At step S11, at least one input stroke is acquired and displayed.

The character input method in this embodiment is suitable for languages with an ideographic function (ideographic languages and ideo-phonographic languages), and characters input generally correspond to languages with an ideographic function, such as Chinese characters (Chinese characters in Chinese, Japanese and Korean), Chũ Nôm in Vietnamese, etc. For the convenience of description, the character input method provided in the present application will be described below by taking Chinese characters as an example. In fact, these methods can be applied to other languages with an ideographic function.

After an instruction to call the input method is received, an input method interface can be displayed on a screen. In response to the operation of a user on the input method interface, the corresponding instruction is acquired, and the input method interface is updated in response to the instruction, so as to complete character input step by step.

In this embodiment, character input is divided into three parts: stroke-component-character, and except stroke, the acquisition of the other two parts depends on the previous part. Components refer to single Chinese characters with the ability of character formation and variants thereof, which are not necessarily the same as radicals. Each component consists of at least one stroke.

During the acquisition of each part, candidate content can be displayed on the input method interface. In response to receiving a display switch instruction (for example, slide to a side or scroll up and down), the user can replace some or all of the candidate content. In response to receiving a selection instruction, the user can enter the next stage of the current part or a selection process of the next part according to the selected content.

The acquisition of the at least one input stroke can be based on a stroke database or a sensor.

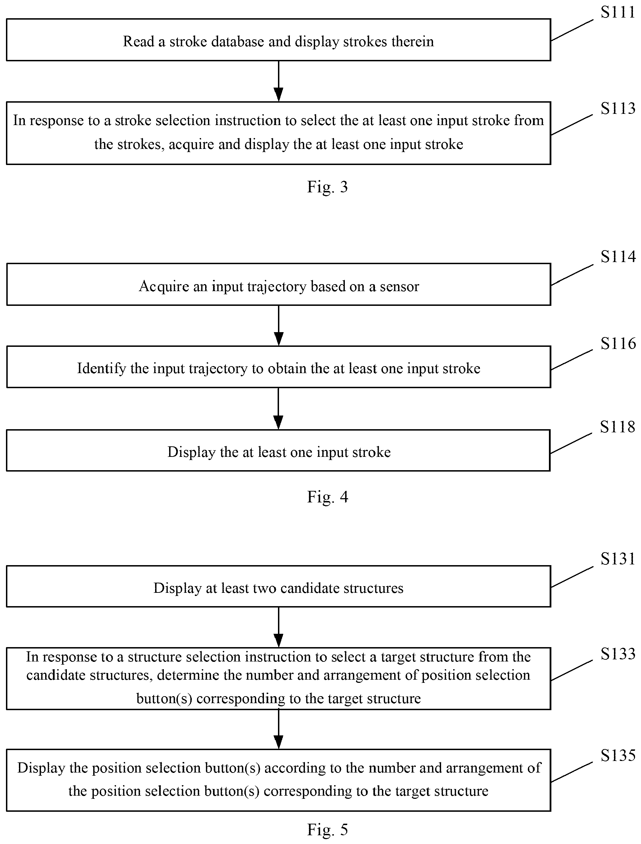

As shown in Fig. 3, in an embodiment of the present invention, an input stroke is acquired based on a stroke database, and S11 may specifically include the following steps.

At step S111, a stroke database is accessed and strokes therein are displayed.

The displayed strokes may be some or all strokes in the stroke database.

At step S113, in response to a stroke selection instruction to select the at least one input stroke from the strokes, the at least one input stroke is acquired and displayed.

Optionally, the displayed strokes may be basic strokes in the stroke database, such as dot, horizontal, vertical, throw, press, upward horizontal, etc. The basic strokes can be combined to form other strokes. In addition, since the strokes may be deformed when forming components, the stroke database may further include the variant forms of strokes.

If the content that can be displayed in the input method interface is limited, the at least one input stroke can be acquired by stages. For example, basic strokes are displayed first, selected basic strokes are determined according to received operation instructions from a user on the input method interface, strokes and/or variant forms related to the selected basic strokes are displayed, and then specific at least one input stroke is determined according to the received operation instructions from the user on the input method interface.

As shown in Fig. 4, in an embodiment of the present invention, an input stroke is acquired based on a sensor, and S11 may specifically include the following steps.

At step S114, an input trajectory based on a sensor is acquired.

At step S116, the input trajectory is identified to obtain the at least one input stroke.

At step S118, the at least one input stroke is displayed.

In response to the sensor being a touch screen, the sensor-based method can also be called a handwriting-based method. In response to the sensor being a camera, the sensor-based method can also be called an image recognition-based method , that is, a camera is used to takes pictures of some or all characters, and then at least one input stroke is identified from the pictures of the characters.

At step S12, candidate components containing the at least one input stroke are retrieved and displayed.

The candidate components containing the at least one input stroke can be retrieved in a component database, and then retrieval results are displayed. If there are too many retrieval results, the number of input strokes can be increased, thus reducing the number of candidate components to facilitate selection.

The application basis of this embodiment includes destructuring a target language to which the target character belongs to obtain a database of the target language, and the database may include a component database and a structure database. The component database includes a plurality of components, and the structure database includes various plane structures of the target language. Each structure includes the number of components that make up the structure and the position of each component, and does not necessarily limit what each component is. Components may be deformed differently depending on positions thereof.

The information of a component in the component database may include a position order of strokes that make up the component. The position order is determined by a writing order, generally from left to right, from top to bottom, and from outside to inside. The position order can be introduced in the process of retrieving and/or displaying the candidate components.

For example, the candidate components can be retrieved only from components with the same input order and position order of input strokes, thereby reducing the number of the candidate components. For example, in response to a first input stroke being horizontal ( 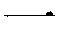 ), the candidate components will be retrieved only from components that contain horizontal ( 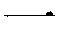 ) and have horizontal ( 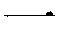 ) as the stroke with the position order of 1 (i.e. the first stroke); and in response to a second input stroke vertical ( 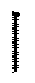 ) being added, the candidate components will be retrieved only from components that contain horizontal ( 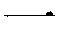 ) and vertical ( 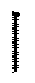 ) and have horizontal ( 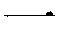 ) as the stroke with the position order of 1 (i.e. the first stroke) and vertical ( 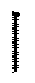 ) as the stroke with the position order of 2.

For example, the matching degree between the candidate components and the at least one input stroke can be calculated, and then the candidate components are arranged and displayed in order of matching degrees (generally from high to low). The matching degree is the similarity between the input order of the input stroke and the position order of the input stroke in the candidate component.

In one embodiment of the present application, a position of the input stroke in the candidate component may be selected, so as to determine the candidate component according to both the input stroke and the position of the input stroke.

At step S13, in response to a component selection instruction to select a target component from the candidate components, the target component and at least one position selection button for selecting a position of the target component are displayed.

Positions of components are mainly related to the structure database. Structures in the structure database are divided into two categories: single-body structures and combined structures. The single-body structure has only one component, and the combined structure includes at least two components. The combined structures can be further divided according to the combination mode of components in the combined structure, such as left-right structure, top-bottom structure, left-middle-right structure, etc.

Before executing this step, a preset position corresponding to the target component can be acquired, and then the target component is displayed at the preset position and/or characters with the target component at the preset position are retrieved and displayed when the target component is displayed in the input method interface for the first time.

The number of position selection buttons is generally greater than 1 and the position selection buttons are arranged in an array. The arrangement of the position selection buttons displayed in the input method interface for the first time, that is, the initial arrangement of the position selection buttons can be preset or selected by the user.

As shown in Fig. 5, in an embodiment of the present invention, step S13 may include the following steps specifically.

At step S131, at least two candidate structures are displayed.

At step S 133, in response to a structure selection instruction to select a target structure from the candidate structures, the number and arrangement of position selection button(s) corresponding to the target structure are determined.

The candidate structure/target structure here can be a specific structure in the structure database, or refers to a certain type of structures in the structure database.

At step S135, the position selection button(s) is/are displayed according to the number and arrangement of the position selection button(s) corresponding to the target structure.

The position selection button(s) can be updated according to the target position selected for the target component. Specifically, fuzzy retrieval can be conducted in the structure database, and then the arrangement of the position selection button(s) can be updated according to retrieval results. The fuzzy retrieval here requires low accuracy. For example, the target position can be mapped to more than one relevant position before retrieval. In response to zooming/dragging being involved in the process of determining the target position and a touch trajectory for inputting the position selection instruction being relatively continuous, the arrangement of the position selection buttons can be updated in real time at a certain frequency in the process of receiving the touch trajectory, without the need to wait until zooming/dragging ends.

At step S14, in response to a position selection instruction to select the position of the target component, a target position corresponding to the position selection instruction is acquired.

Specifically, one or more position selection buttons selected by the position selection instruction can be acquired, and a position of the one or more position selection buttons selected by the position selection instruction in the plurality of position selection buttons is acquired as the target position. Then the one or more position selection buttons corresponding to the target position can be marked.

For example, when the button(s) located at the "top" in the plurality of position selection buttons is/are selected, the target position may be determined as "top".

In one embodiment of the present application, the number of the position selection buttons is at least nine, and the position selection buttons are arranged into a square array. For example, when there are nine position selection buttons, the nine position selection buttons are arranged into a 3x3 square array to represent "inside", "center" and "outside". In this way, many positions may be represented.

In one embodiment of the present application, the target position may be acquired by fuzzy matching. If there are nine position selection buttons, when the position selection buttons in the first column from the left are selected, the target position may be left or left-center, so that more potential candidate characters may be acquired.

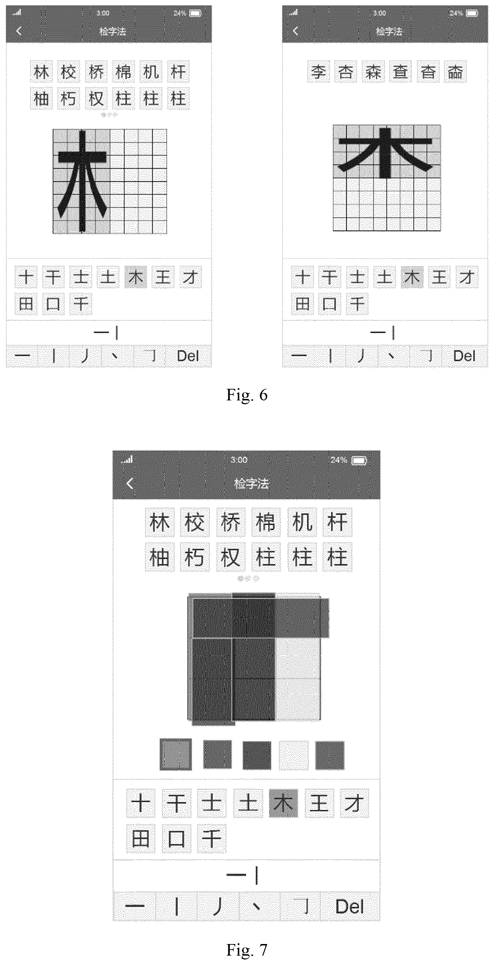

In one embodiment of the present application, the position selection instruction may include an instruction to move and/or adjust the target component. The movement of the target component can be realized by dragging or by tapping to select a moving target. After being moved, the target component can enter a structural schematic area formed by the plurality of position selection buttons arranged in an array and can move therein. The target component can be adjusted in the structural schematic area, such as component size adjustment, stretching/shortening of the component in the length/width direction, etc. For example, referring to Fig. 6, on the left side, the target component " 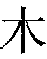 " is moved into the left half of the structural schematic area and narrowed, and on the right side, the same target component " 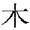 " is moved into the upper half of the structural schematic area and flattened.

Then, at least one position selection button covered by the target component and processed by the position selection instruction is acquired as the one or more position selection buttons corresponding to the position selection instruction, that is, the target positions. In the process of determining the target position, the selection can be made with reference to the target component itself or a rectangular area containing the target component. The one or more position selection buttons selected as the target position is not necessarily completely covered by the target component/rectangular area. A coverage threshold can be set. If the proportion of a position selection button covered by the target component/rectangular area being greater than or equal to the coverage threshold, the position selection button is selected as the target position.

In one embodiment of the present application, the position selection instruction includes a selection instruction to select among the position selection buttons, which can be in the form of tapping or dragging, and the position selection button(s) in a corresponding area indicates the target position. Different position selection buttons can be distinguished by numbers, colors, etc. The target position can be marked by adding a serial number corresponding to the target position to the target component and/or modifying the color of the target component itself or the background color of the target component to a color corresponding to the target position.

In one embodiment of the present application, the position selection instruction includes a selection instruction to select an indicator button corresponding to the position selection buttons. Each indicator button corresponds to a single position selection button or a combination of at least two position selection buttons, which can be distinguished by numbers, colors, etc. In response to the selection instruction to select an indicator button, a position selection button or a combination of position selection buttons corresponding to the selected indicator button is taken as the target position. The target position can be marked by adding a serial number corresponding to the target position to the target component and/or modifying the color of the target component itself or the background color of the target component to a color corresponding to the target position. For example, referring to Fig. 7, the indicator buttons are below the structure schematic area formed by the plurality of position selection buttons arranged in an array, and five different combinations of the position selection buttons are marked in the structure schematic area, each combination corresponding to one indicator button.

At step S15, candidate characters with the target component at the target position are retrieved and displayed.

The character pattern of a Chinese character is determined by a structure of the Chinese character in the structure database and corresponding components. For example, " 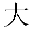 " is composed of a basic component " 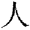 " and a basic component " 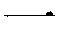 " in a frame structure; " 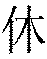 " and " 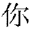 " are each composed of a variant form " 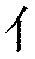 " and another component in a left-right structure; " 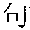 " and " 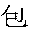 " are each composed of a variant form " 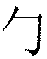 " and another component in an upper right enclosing structure; and " 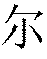 " and " 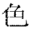 " are each composed of a variant form " 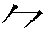 " and another component in a top-bottom structure.

Based on the target component and the target position thereof, the candidate characters can be easily retrieved. Specifically, at least one candidate structure can be obtained by conducing retrieval in the structure database according to the target position, and then characters having the at least one candidate structure and having the target component at the target position are retrieved as the candidate characters. The retrieval of the candidate structures here can be accurate, and can also be vague, which is not limited here.

If there are too many candidate characters, the above steps can be repeated to add new components, thus reducing the number of candidate characters to facilitate selection. In response to a component adding instruction, the operation from acquiring and displaying at least one input stroke to retrieving and displaying candidate characters with the target component at the target position is repeated, to update the candidate characters.

At step S 16, in response to a character selection instruction to select a target character from the candidate characters, the target character is acquired.

The target character can be input in an input box for subsequent operation.

In one embodiment of the present application, if no candidate component is found, the at least one input stroke is taken as the target character; and if no candidate character is found, the target component is taken as the target character.

The specific input process will be explained with an example.

Suppose a Chinese character to be input is " 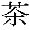 ".

According to the principle of from left to right and from top to bottom, a user determines that the initial stroke is " 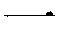 ". After the initial stroke is input, the candidate components displayed are: 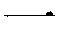 , 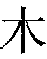 , 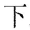 , 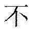 , 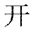 , 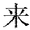 , etc., which do not include the target component " 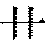 " at the top of ";R". Then the searcher inputs the second stroke " 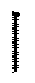 ", and the candidate components displayed are: 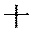 , 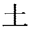 , 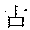 , 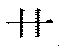 , etc., which include the target component. The searcher directly selects the target component " 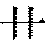 " and determines that the position of " 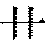 " is at the top based on the visual impression of the character " 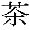 ". Chinese characters with " 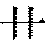 " at the top obtained after retrieval are: 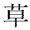 , 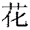 , , 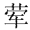 , 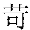 , 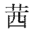 , 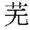 , 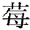 , etc. But the target character is not included.

So the searcher starts to add components. According to the writing order, the second component after " 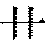 " is " 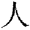 ". Still according to the writing order, the initial stroke of " 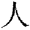 " is " 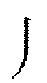 ", and the candidate components displayed are: 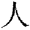 , 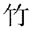 , 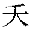 , 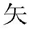 , 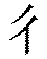 , 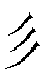 , etc. The target component appears, and the searcher directly selects the target component " 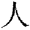 " and determines that " 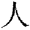 " is in the middle based on the visual impression of the character " 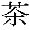 ".

Chinese characters retrieved based on the first component " 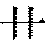 " at the top and the second component " 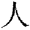 " in the middle are: 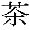 , 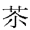 , 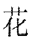 , 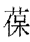 , 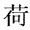 , etc. The target Chinese character " 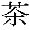 " now appears. The user selects the character " 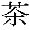 " to complete the input.

In the above example, the user inputs the strokes/components according to the writing order. In practical application, the input does not have to be conducted according to the writing order, as long as the input strokes are included in the components/the input components are included in the characters.

Through the implementation of this embodiment, the target component is selected according to the at least one input stroke, then the candidate characters are obtained based on the target component and the target position thereof, and finally the target character is selected from the candidate characters. For languages with an ideographic function, users only need to know the shapes of characters to type in without the need to learn the pronunciations or roots of the characters, which reduces the difficulty of using an input method for languages with an ideographic function, thus facilitating the popularization and use of the languages.

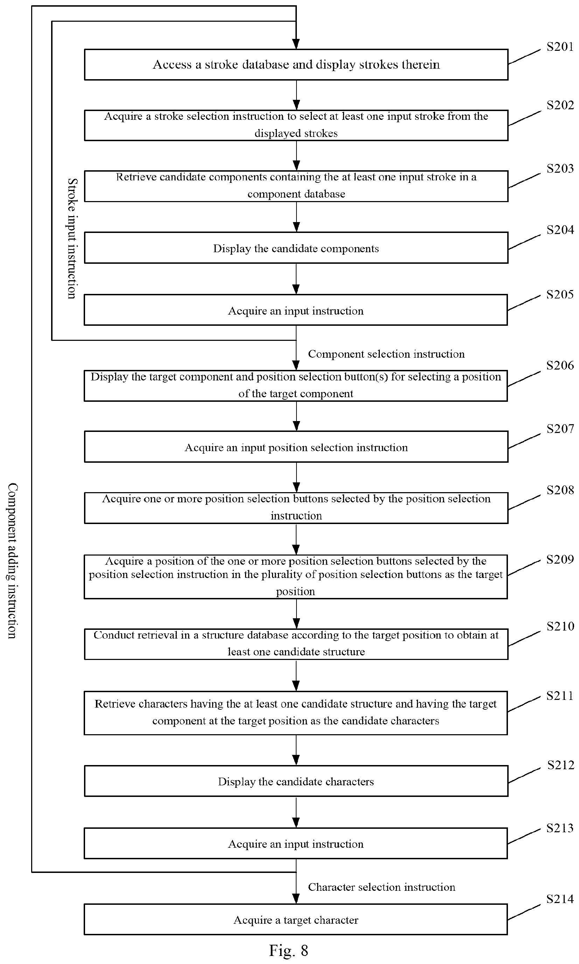

Fig. 8 is a flowchart of another embodiment of a character retrieval method of the present application. This embodiment is a further extension of the embodiment shown in Fig. 2, and the same parts are not repeated here. As shown in Fig. 8, this embodiment may include the following steps.

At step S201, a stroke database is accessed and strokes therein are displayed.

At step S202, a stroke selection instruction to select at least one input stroke from the displayed strokes is acquired.

At step S203, candidate components containing the at least one input stroke are retrieved in a component database.

At step S204, the candidate components are displayed.

At step S205, an input instruction is acquired.

In response to the input instruction being a component selection instruction to select a target component from the candidate components, S206 is executed; and in response to the input instruction being a stroke input instruction, S201 is executed.

At step S206, the target component and position selection button(s) for selecting a position of the target component are displayed.

At step S207, an input position selection instruction is acquired.

The position selection instruction is used for selecting the position of the target component.

At step S208, one or more position selection buttons selected by the position selection instruction are acquired.

At step S209, a position of the one or more position selection buttons selected by the position selection instruction in the plurality of position selection buttons is acquired as the target position.

At step S210, retrieval is conducted in a structure database according to the target position to obtain at least one candidate structure.

At step S211, characters having the at least one candidate structure and having the target component at the target position are retrieved as the candidate characters.

At step S212, the candidate characters are displayed.

At step S213, an input instruction is acquired.

In response to the input instruction being a character selection instruction to select a target character from the candidate characters, S214 is executed; and in response to the input instruction being a component adding instruction, S201 is executed.

At step S214, the target character is acquired.

The specific input method interface and input process will be explained with an example with reference to attached drawings.

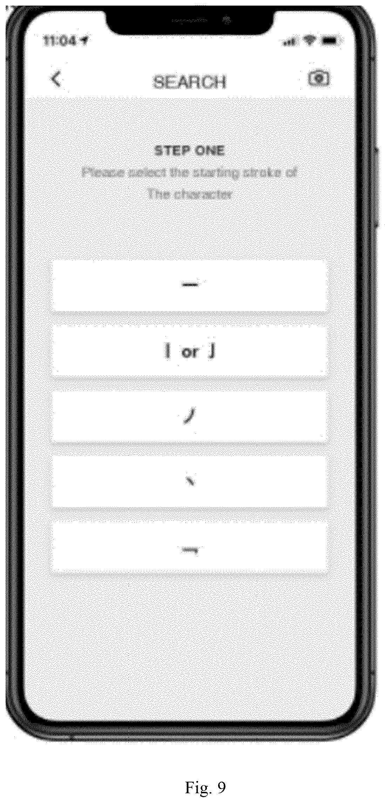

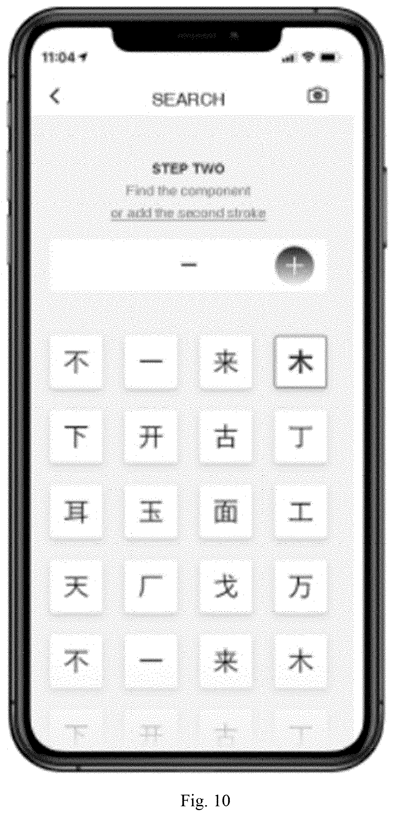

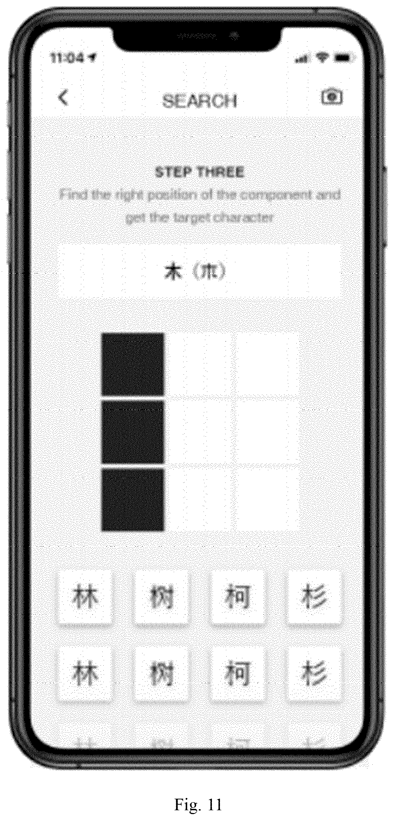

As shown in Fig. 9, five candidate strokes are displayed on an input method interface, a user selects " 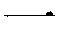 ", and the input method interface is updated according to this selection instruction. The updated input method interface is shown in Fig. 10 where a number of candidate components containing " 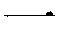 " are listed, the user selects " 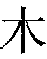 ", and the input method interface is updated again according to this selection instruction. The updated input method interface is shown in Fig. 11 where position selection buttons arranged in nine squares are listed for the user to confirm the position of the component " 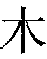 ", and the candidate characters with " 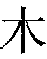 " at the current position are listed below the nine squares.

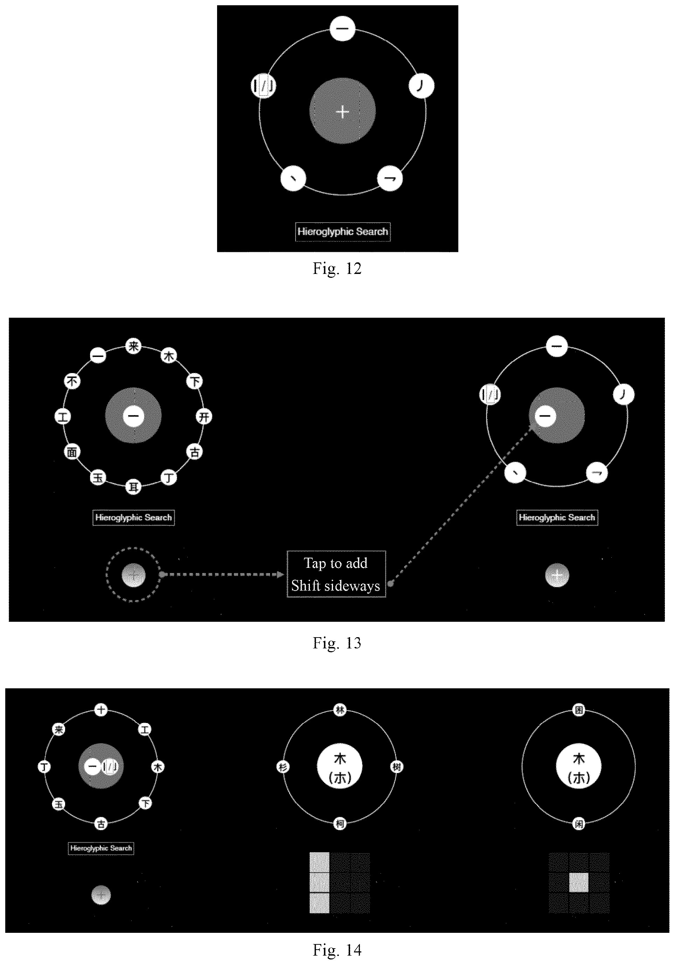

As shown in Fig. 12, a "+" button is displayed at the center of another input method interface, and five candidate strokes are displayed on a circle around the center. As shown in Fig. 13, after the input stroke " 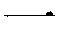 " is selected, the input stroke " 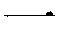 " is displayed at the center, the candidate components containing " 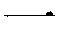 " are displayed on the circle, and a "+" button is displayed below the circle. When the user taps the "+" button, the " 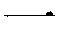 " at the center moves sideways, and candidate strokes are displayed again on the circle. As shown in Fig. 14, after the user selects the second input stroke " 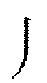 ", the candidate components including " 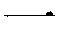 " and " 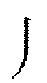 " are displayed on the ring, and the "+" button is displayed below the circle. The user selects " 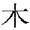 " as the target component from the candidate components, " 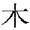 " is displayed at the center, position selection buttons arranged in nine squares are listed below the circle for the user to confirm the position of the component "*", and the candidate characters with " 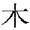 " at the current position are displayed on the circle.

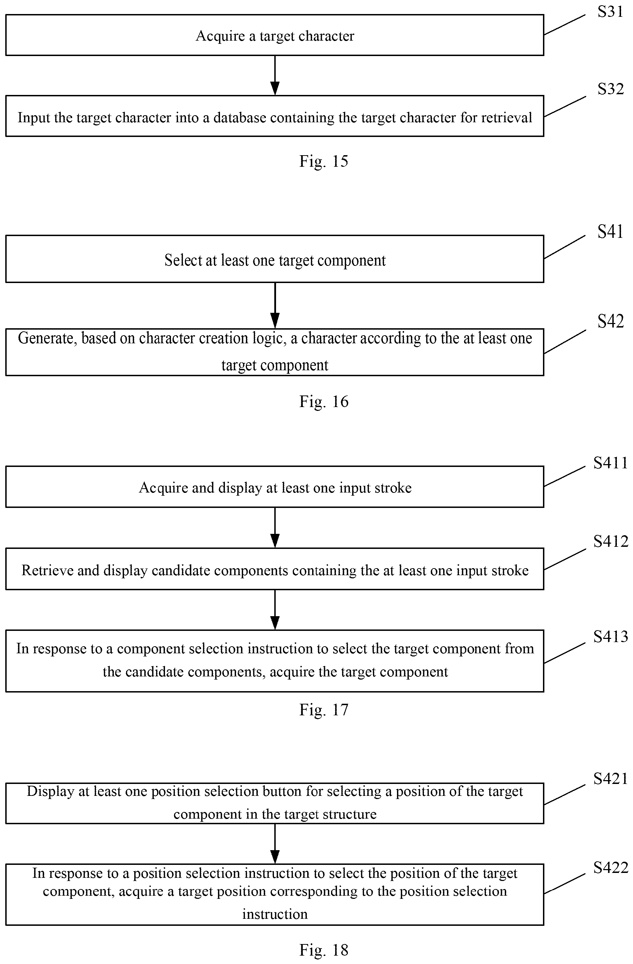

Fig. 15 is a flowchart of an embodiment of a character retrieval method of the present application. As shown in Fig. 15, this embodiment may include the following steps.

At step S31, a target character is acquired.

Any embodiment or possible combination of embodiments of the character input method of the present application can be adopted to obtain the target character, which is not limited here.

At step S32, the target character is input into a database containing the target character for retrieval.

Specifically, the target character can be input into a database where reference books, such as dictionaries, encyclopedias, etc., are recorded for retrieval. Alternatively, a search engine can be used to retrieve web pages containing the target character.

Fig. 16 is a flowchart of an embodiment of a character generation method of the present application. As shown in Fig. 16, this embodiment may include the following steps.

At step S41, at least one target component is selected.

The character generation method in this embodiment is suitable for languages with an ideographic function (ideographic languages and ideo-phonographic languages), and characters input generally correspond to languages with an ideographic function, such as Chinese characters (Chinese characters in Chinese, Japanese and Korean), Chũ Nôm in Vietnamese, etc. For the convenience of description, the character generation method provided in the present application will be described below by taking Chinese characters as an example. In fact, these methods can be applied to other languages with an ideographic function.

The traditional Chinese character creation method is based on the "six category" approach mentioned in *Shuowen Jiezi* written by Xu Shen in the Eastern Han Dynasty. The six categories are: form imaging or pictographs, combining meaning, form and sound, indicators of function, reciprocally glossing and loaning characters. To this day, the patterns of Chinese characters have undergone a lot of changes, and the original character creation method can hardly be understood and widely used any more. It is necessary to reinterpret and create Chinese characters with new perspectives and methods.

Components refer to single Chinese characters with the ability of character formation and variants thereof, which are not necessarily the same as radicals. Each component consists of at least one stroke.

The application basis of this embodiment includes destructuring a target language to which the target character belongs to obtain a database of the target language, and the database may include a component database and a structure database. The component database includes a plurality of components, and the structure database includes various plane structures of the target language. Each structure includes the number of components that make up the structure and the position of each component, and does not necessarily limit what each component is. Components may be deformed differently depending on positions thereof.

As shown in Fig. 17, the acquisition of a single target component may include the following steps.

At step S411, at least one input stroke is acquired and displayed.

At step S412, candidate components containing the at least one input stroke are retrieved and displayed.

At step S413, in response to a component selection instruction to select the target component from the candidate components, the target component is acquired.

At step S42, based on character creation logic, one or more characters are generated according to the at least one target component.

In this case, the character creation logic for characters with a compound structure is that, for an ideographic system centered around ideographic components, there are two main ways of character creation: one is a combination of ideographic components at different positions of the same plane; and the other is a combination of ideographic components and phonetic components at different positions of the same plane.

If the number of the at least one target component is 1, the target component can be used as a generated single-body character, which can also be called a pictograph.

If the number of the at least one target component is greater than 1, the target components can be combined according to the target structure to generate a combined character. After the target structure is determined, the number of components and the position of each component are determined. The target components are put in the corresponding positions to obtain the character.

The target components may all be ideographic components, or the target components may include at least one ideographic component and at least one phonetic component.

In one embodiment of the present application, the target structure can be selected from the candidate structures. The candidate structures may include at least one of the following: top-bottom structure, top-middle-bottom structure, left-right structure, left-middle-right structure, fully-enclosed structure, semi-enclosed structure, interpenetrating structure and 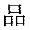 -shaped structure. Some or all of these structures can be further divided according to the actual situation. For example, semi-enclosed structures can be further divided into left semi-enclosed structures, right enclosed structures, top enclosed structures and bottom enclosed structures.

In one embodiment of the present application, the target structure can be customized by an operating instruction. As shown in Fig. 18, the acquisition of the target structure may include:
At step S421, one or more position selection buttons for selecting a position of the target component in the target structure are displayed.

The number of the at least one position selection button is generally greater than 1 and the position selection buttons are arranged in an array. The arrangement of the position selection buttons displayed for the first time, that is, the initial arrangement of the position selection buttons can be preset or selected by the user.

At step S422, in response to a position selection instruction to select the position of the target component, a target position corresponding to the position selection instruction is acquired.

Specifically, one or more position selection buttons selected by the position selection instruction can be acquired, and a position of the one or more position selection buttons selected by the position selection instruction in the plurality of position selection buttons is acquired as the target position. Then the one or more position selection buttons corresponding to the target position can be marked.

The target structure is determined by the target positions of all the target components, such that the obtained target structure does not have to be limited by the structure database, and the structure of the generated character may not belong to the structure database.

The specific acquisition process of the target component and the target structure in this embodiment can be realized by referring to the related description in the previous embodiments, and will not be repeated here.

In this embodiment, Chinese characters are generated with components as the unit, and the character generation method is easy to understand and convenient to operate. In the case of character absence, characters can be generated and added to a character database, which is easy to achieve. Wrongly written characters can also be generated in teaching to help students distinguish between right and wrong characters and improve the observation ability of students.

The apparatus embodiments of the present application will be described below, which can be used to carry out the character input/retrieval/generation method in the above embodiments of the present application. For details not disclosed in the apparatus embodiments of the present application, please refer to the embodiments of the character input/retrieval/generation method described above.

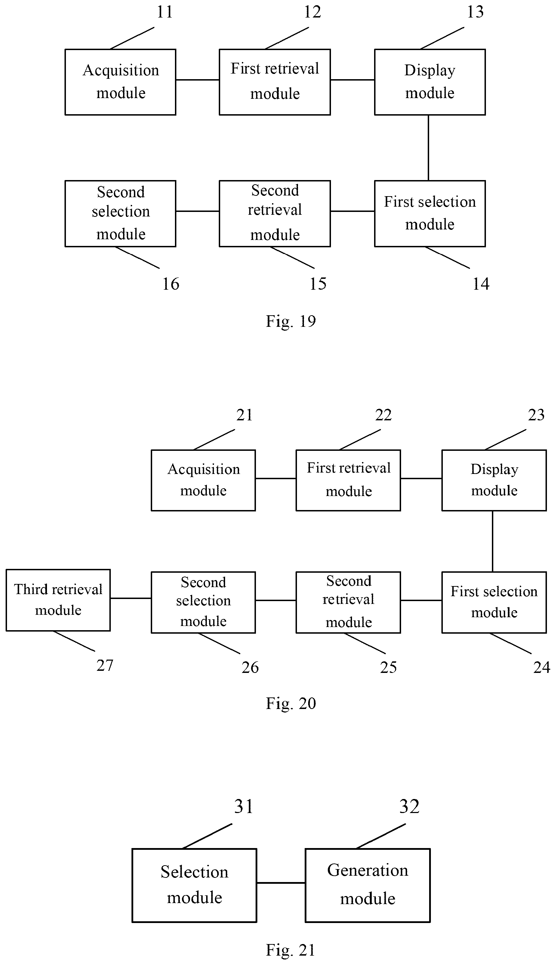

As shown in Fig. 19, an embodiment of a character input apparatus of the present application includes an acquisition module 11, a first retrieval module 12, a display module 13, a first selection module 14, a second retrieval module 15 and a second selection module 16.

The acquisition module 11 is configured to acquire and display at least one input stroke. The first retrieval module 12 is configured to retrieve and display candidate components containing the at least one input stroke. The display module 13 is configured to, in response to a component selection instruction to select a target component from the candidate components, display the target component and at least one position selection button for selecting a position of the target component. The first selection module 14 is configured to, in response to a position selection instruction to select the position of the target component, acquire a target position corresponding to the position selection instruction. The second retrieval module 15 is configured to retrieve and display candidate characters with the target component at the target position. The second selection module 16 is configured to, in response to a character selection instruction to select a target character from the candidate characters, acquire the target character.

As shown in Fig. 20, an embodiment of a character retrieval apparatus of the present application includes an acquisition module 21, a first retrieval module 22, a display module 23, a first selection module 24, a second retrieval module 25, a second selection module 26 and a third retrieval module 27.

The acquisition module 21 is configured to acquire and display at least one input stroke. The first retrieval module 22 is configured to retrieve and display candidate components containing the at least one input stroke. The display module 23 is configured to, in response to a component selection instruction to select a target component from the candidate components, display the target component and at least one position selection button for selecting a position of the target component. The first selection module 24 is configured to, in response to a position selection instruction to select the position of the target component, acquire a target position corresponding to the position selection instruction. The second retrieval module 25 is configured to retrieve and display candidate characters with the target component at the target position. The second selection module 26 is configured to, in response to a character selection instruction to select a target character from the candidate characters, acquire the target character. The third retrieval module 27 is configured to input the target character into a database containing the target character for retrieval.

As shown in Fig. 21, an embodiment of a character generation apparatus of the present application includes a selection module 31 and a generation module 32.

The selection module 31 is configured to select at least one target component. The generation module 32 is configured to, based on character creation logic, generate a character according to the at least one target component.

Those skilled in the art can understand that individual aspects of the present application may be implemented as systems, methods or program products. Accordingly, aspects of the present application may take the form of an entirely hardware embodiment, an entirely software embodiment (including firmware, micro-code, etc.,) or an embodiment combining software and hardware aspects that may all generally be referred to herein as a "circuit," "module" or "system."

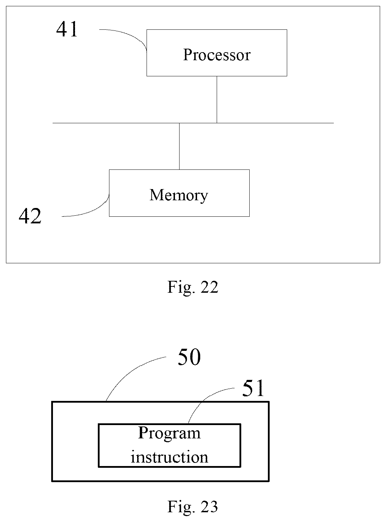

An electronic device according to this embodiment of the present application will be described below with reference to Fig. 22. The electronic device shown in Fig. 22 is just an example and should not limit the scope of functions and application of the embodiments of the present application.

As shown in Fig. 22, the electronic device is in the form of a general-purpose computing device. Components of the electronic device may include but are not limited to: at least one processor 41, at least one memory 42, and a bus connecting different system components (including the processor 41 and the memory 42).

Here, the memory 42 stores program instructions for implementing the method provided by any of the above embodiments, and the processor 41 is used for executing the program instructions stored in the memory 42 to implement the steps of the above method embodiment. Here, the processor 41 may also be called CPU (Central Processing Unit). The processor 41 may be an integrated circuit chip with signal processing capability. Alternatively, the processor 41 may be a general-purpose processor, a digital signal processor (DSP), an application specific integrated circuit (ASIC), a field programmable gate array (FPGA) or other programmable logic devices, discrete gate or transistor logic devices, and discrete hardware components. The general-purpose processor may be a microprocessor or the processor may be any conventional processor.

The memory 42 may include a computer-readable medium in the form of a volatile memory, such as a random access memory (RAM) and/or a cache memory, and may further include a read-only memory (ROM).

The bus may be one or more of several types of bus structures, including a memory bus or a memory controller, a peripheral bus, an accelerated graphics port, a processing unit or a local bus using any of a variety of bus structures.

The electronic device may communicate with one or more external devices (such as a keyboard, a pointing device, a Bluetooth device, etc.), one or more devices that enable users to interact with the electronic device, and/or any device that enables the electronic device to communicate with one or more other computing devices (such as a router, a modem, etc.). Such communication can be done through an input/output (I/O) interface. Furthermore, the electronic device may also communicate with one or more networks (such as a local area network (LAN), a wide area network (WAN), and/or a public network such as the Internet) through a network adapter.

Fig. 23 is a schematic diagram of an embodiment of a computer-readable storage medium of the present application. As shown in Fig. 23, the computer-readable storage medium 50 of the embodiment of the present application stores program instructions 51 which, when executed, implement the method provided by the above embodiment of the present application. Here, the program instructions 51 can form a program file and be stored in the computer-readable storage medium 50 in the form of a software product, such that a computer device (which may be a personal computer, a server, or a network device) or a processor can execute all or part of the steps of the methods in various embodiments of the present application. The afore-mentioned computer-readable storage medium 50 may include: various media that can store program codes, such as a USB flash drive, a mobile hard disk, a read-only memory (ROM), a random access memory (RAM), a magnetic disk or an optical disk, or a terminal device such as a computer, a server, a mobile phone, and a tablet computer.

From the above description of the embodiments, it is easy for those skilled in the art to understand that the exemplary embodiments described herein may be implemented in software or software combined with necessary hardware. Therefore, the technical schemes according to the embodiments of the present application may be embodied in the form of a software product, which may be stored in a non-volatile storage medium (which may be a CD-ROM, USB flash drive, mobile hard drive, etc.) or on a network, and may include several instructions to enable a computing device (which may be a personal computer, server, terminal device, or network device, etc.) to execute the method according to the embodiments of the present application.

According to one embodiment of the present application, there is also provided a computer-readable storage medium that stores a program product capable of implementing the method described above in the specification. In some possible implementations, individual aspects of the application may also be embodied in the form of a program product including program code, which, when executed on a terminal device, causes the terminal device to perform the steps according to various exemplary embodiments of the present application described in the above "exemplary methods" section herein.

According to an embodiment of the present application, the program product for realizing the above method may be a portable compact disk read-only memory (CD-ROM) and include program codes, and can be run on a terminal device such as a personal computer. However, the program product of the present application is not limited to this. Herein, the readable storage medium may be any tangible medium containing or storing a program, which can be used by or in combination with an instruction execution system, apparatus or instrument.

The program product may use any combination of one or more computer-readable media. The computer-readable medium can be a computer-readable signal medium or a computer-readable storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device.

Program code embodied on a computer-readable medium may be transmitted using any appropriate medium, including but not limited to wireless, wireline, optical fiber cable, RF, etc., or any suitable combination of the foregoing.

Computer program code for carrying out operations of the present application may be written in any combination of one or more programming languages, including an object-oriented programming language such as Java, C++, or the like, and conventional procedural programming languages, such as the "C" programming language or similar programming languages. The program code may execute entirely on the user's computer, partly on the user's computer, as a stand-alone software package, partly on the user's computer and partly on a remote computer, or entirely on a remote computer or server. In the latter scenario involving a remote computer, the remote computer may be connected to the user's computer through any type of network, including a local area network (LAN) or a wide area network (WAN), or the connection may be made to an external computer (for example, through the Internet using an Internet Service Provider).

In addition, the above drawings are only schematic illustrations of the processes included in the method according to the exemplary embodiments of the present application, and are not intended to be limiting. It is easy to understand that the processes shown in the above drawings do not indicate or limit a chronological order of these processes. In addition, it is also easy to understand that these processes may be executed synchronously or asynchronously, for example, in a plurality of modules.

It is to be understood that the present application is not limited to the precise structures described above and shown in the accompanying drawings, and modifications and changes can be made without departing from the scope of the present application. The scope of the present application is limited only by the appended claims.

## Claims

1. A character input method, comprising:
acquiring and displaying at least one input stroke;
retrieving and displaying candidate components containing the at least one input stroke;
in response to a component selection instruction to select a target component from the candidate components, displaying the target component and at least one position selection button for selecting a position of the target component;
in response to a position selection instruction to select the position of the target component, acquiring a target position corresponding to the position selection instruction;
retrieving and displaying candidate characters with the target component at the target position; and
in response to a character selection instruction to select a target character from the candidate characters, acquiring the target character.

2. The character input method of claim 1, wherein the step of acquiring and displaying at least one input stroke comprises:
accessing a stroke database and displaying strokes therein; and
in response to a stroke selection instruction to select the at least one input stroke from the strokes, acquiring and displaying the at least one input stroke.

3. The character input method of claim 2, wherein the step of displaying strokes therein comprises:
displaying basic strokes in the stroke database.

4. The character input method of claim 1, wherein the step of acquiring and displaying at least one input stroke comprises:
acquiring an input trajectory based on a sensor;
identifying the input trajectory to obtain the at least one input stroke; and
displaying the at least one input stroke.

5. The character input method of claim 1, wherein the step of retrieving and displaying candidate components containing the at least one input stroke comprises:
retrieving the candidate components containing the at least one input stroke in a component database; and
displaying the candidate components.

6. The character input method of claim 5, wherein the step of displaying the candidate components comprises:
displaying the candidate components in order of matching degrees, the matching degree being the similarity between an input order of the input strokes and a position order of the input strokes in the candidate component.

7. The character input method of claim 1, wherein the number of the at least one position selection button is greater than 1 and the position selection buttons are arranged in a preset array.

8. The character input method of claim 1, wherein the step of displaying at least one position selection button for selecting a position of the target component comprises:
displaying at least two candidate structures;
in response to a structure selection instruction to select a target structure from the candidate structures, determining the number and arrangement of at least one position selection button corresponding to the target structure; and
displaying the at least one position selection button according to the number and arrangement of the at least one position selection button corresponding to the target structure.

9. The method of claim 7 or claim 8, after the step of in response to a position selection instruction to select the position of the target component, acquiring a target position corresponding to the position selection instruction, the method further comprising:
conducting fuzzy retrieval in a structure database according to the target position; and
updating the arrangement of the at least one position selection button according to retrieval results.

10. The character input method of claim 1, wherein the step of in response to a position selection instruction to select the position of the target component, acquiring a target position corresponding to the position selection instruction comprises:
acquiring one or more position selection buttons selected by the position selection instruction; and
acquiring a position of the one or more position selection buttons selected by the position selection instruction in the plurality of position selection buttons as the target position.

11. The character input method of claim 10, wherein the position selection instruction comprises an instruction to move and/or adjust the target component, and the step of acquiring one or more position selection buttons selected by the position selection instruction comprises:
acquiring at least one position selection button covered by the target component and processed by the position selection instruction as the one or more position selection buttons selected by the position selection instruction.

12. The character input method of claim 10, wherein the position selection instruction comprises a selection instruction to select among the position selection buttons.

13. The character input method of claim 10, wherein the position selection instruction comprises a selection instruction to select an indicator button corresponding to the position selection buttons.

14. The character input method of claim 10, after acquiring a target position corresponding to the position selection instruction, the method further comprising:
marking one or more position selection buttons corresponding to the target position.

15. The character input method of claim 10, before acquiring a target position corresponding to the position selection instruction, the method further comprising:
acquiring a preset position corresponding to the target component.

16. The character input method of claim 1, wherein the step of retrieving and displaying candidate characters with the target component at the target position comprises:
conducting retrieval in a structure database according to the target position to obtain at least one candidate structure;
retrieving characters having the candidate structures where a component at the target position is the target component as the candidate characters; and
displaying the candidate characters.

17. The character input method of claim 1, after retrieving and displaying candidate characters with the target component at the target position, the method further comprising:
in response to a component adding instruction, repeating the operation from acquiring and displaying at least one input stroke to retrieving and displaying candidate characters with the target component at the target position, to update the candidate characters.

18. The character input method of claim 1,before accessing a stroke database, the method further comprising:
destructuring a target language to which the target character belongs to obtain a database of the target language, the database comprising a component database and a structure database.

19. A character retrieval method, comprising:
acquiring a target character by the method according to any one of claims 1-18; and
inputting the target character into a database containing the target character for retrieval.

20. A character generation method, comprising:
selecting at least one target component; and
generating, based on character creation logic, a character according to the at least one target component.

21. The method of claim 20, wherein the number of the target component is 1, and the step of generating, based on character creation logic, a character according to the at least one target component comprises:
taking the target component as a generated single-body character.

22. The method of claim 20, wherein the number of the target components is greater than 1, and the step of generating, based on character creation logic, a character according to the at least one target component comprises:
combining the target components according to a target structure to generate a combined character.

23. The method of claim 22, wherein the target structure is selected from candidate structures, and the candidate structures comprise at least one of the following: top-bottom structure, top-middle-bottom structure, left-right structure, left-middle-right structure, fully-enclosed structure, semi-enclosed structure, interpenetrating structure and 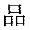 -shaped structure.

24. The character generation method of claim 22, before combining the target components according to a target structure to generate a combined character, the method further comprising:
displaying position selection buttons for selecting positions of the target components in the target structure; and
in response to a position selection instruction to select the positions of the target components, acquiring a target position corresponding to the position selection instruction, the target structure being determined by the target positions of all the target components.

25. The character generation method of any one of claims 22-24, wherein the target components are all ideographic components; or the target components comprise at least one ideographic component and at least one phonetic component.

26. The character generation method of claim 20, wherein the step of selecting at least one target component comprises:
acquiring and displaying at least one input stroke;
retrieving and displaying candidate components containing the at least one input stroke; and
in response to a component selection instruction to select the at least one target component from the candidate components, acquiring the at least one target component.

27. A character input apparatus, comprising:
an acquisition module configured to acquire and display at least one input stroke;
a first retrieval module configured to retrieve and display candidate components containing the at least one input stroke;
a display module configured to, in response to a component selection instruction to select a target component from the candidate components, display the target component and at least one position selection button for selecting a position of the target component;
a first selection module configured to, in response to a position selection instruction to select the position of the target component, acquire a target position corresponding to the position selection instruction;
a second retrieval module configured to retrieve and display candidate characters with the target component at the target position; and
a second selection module configured to, in response to a character selection instruction to select a target character from the candidate characters, acquire the target character.

28. A character retrieval apparatus, comprising:
an acquisition module configured to acquire and display at least one input stroke;
a first retrieval module configured to retrieve and display candidate components containing the at least one input stroke;
a display module configured to, in response to a component selection instruction to select a target component from the candidate components, display the target component and at least one position selection button for selecting a position of the target component;
a first selection module configured to, in response to a position selection instruction to select the position of the target component, acquire a target position corresponding to the position selection instruction;
a second retrieval module configured to retrieve and display candidate characters with the target component at the target position;
a second selection module configured to, in response to a character selection instruction to select a target character from the candidate characters, acquire the target character; and
a third retrieval module configured to input the target character into a database containing the target character for retrieval.

29. A character generation apparatus, comprising:
a selection module configured to select at least one target component; and
a generation module configured to, generate, based on character creation logic, a character according to the at least one target component.

30. An electronic device comprising a memory and a processor, wherein the memory stores program instructions which, when executed by the processor, cause the processor to implement the method of any one of claims 1-26.

31. A computer-readable storage medium storing program instructions, wherein the program instructions, when executed by a processor, cause the processor to implement the method of any one of claims 1-26.
